# EUROPEAN PATENT SPECIFICATION

(11) **EP 2 847 470 B1**
(45) Date of publication and mention of the grant of the patent: **04.12.2019**
(21) Application number: 13788602.4
(22) Date of filing: 24.04.2013
(51) Int. Cl.: F16B 2/08, B65D 25/08, F16B 5/06, F16M 13/02, F17C 13/00

(54) **RETAINER FOR FIXING A CONTROL DEVICE TO A CONTAINER**
HALTER ZUR BEFESTIGUNG EINER STEUERUNGSVORRICHTUNG AN EINEN BEHÄLTER
DISPOSITIF DE RETENUE PERMETTANT DE FIXER UN DISPOSITIF DE COMMANDE À UN RÉCIPIENT

(30) Priority: 08.05.2012 SE 1250468
(43) Date of publication of application: 18.03.2015
(73) Proprietor: Scania CV AB, 151 87 Södertälje (SE)
(72) Inventor: STEEN, Daniel, 151 46 Södertälje (SE); OHLSSON, Johan, 141 72 Segeltorp (SE)
(74) Representative: Scania CV AB
(86) International application number: PCT/SE2013/050446
(87) International publication number: WO 2013/169177

(56) References cited:
- DE-A1- 10 352 084
- US-A- 4 823 445
- US-B1- 6 269 985

## Description

### TECHNICAL FIELD

The present invention relates to a retainer for fixing a control device to a pressure tank or similar container. The invention is primarily intended for use on heavy commercial vehicles, e.g. trucks and buses, but may of course also be used on other types of vehicles, e.g. contractor machines, watercraft etc. equipped with operating means which are preferably associated with some form of container and have to be regulated by means of a wire or similar elongate object. The invention relates also to vehicles equipped with a retainer according to the invention.

### STATE OF THE ART

Heavy commercial vehicles are now normally equipped with one or more pressure tanks to store compressed air which is for example used for the vehicle's brake system. These pressure tanks have to be regularly drained of liquid which accumulates in them, e.g. in the form of condensate, using for the purpose at least one drain valve situated in the portion of the pressure tank which in its fitted state on the vehicle is directed downwards, towards the ground. The drain valve is usually opened by manual operation of a wire which has at its outer end a loop to make it easier for a user to handle and its inner other end fastened in the activating means of the drain valve.

During the manufacture/assembly of the vehicle it is important that the handling of constituent parts be easy and therefore cost-effective, as well as the requirement for the parts themselves to be inexpensive to manufacture and keep in stock but also to perform their intended functions well and reliably, including over time.

The pressure tank or tanks have to be fitted in such a way as to remain securely fastened in the vehicle's chassis at their intended locations even during temporarily difficult conditions, e.g. when the vehicle is travelling on a very uneven running surface or is involved in an accident.

In addition, the drain valve has always to be easy to open and its operating wire needs to be easy to reach, and also to fit. Pressure tanks are currently fitted to vehicles by means, for example, of some form of strap or wire which has a loop at its outer end and is inserted, in conjunction with a rubber bushing, through a hollow in a bracket intended for the purpose. Thereafter the inner end of the wire has to be hooked or fitted firmly in the drain valve which, once the pressure tank has been put into its intended position in the vehicle, will be at a location which is masked and difficult to reach. After the wire has been fastened to the drain valve, the rubber bushing has to be pushed firmly into correct position in the wire retainer. As this operation is difficult and calls for precision, it is time-consuming and therefore expensive.

There have been previous attempts to solve the above problems and propose a structure which alleviates them and speeds up the fitting operation, but without success. The disadvantages are that known solutions entail unergonomic fitting which is stressful for the fitter and takes a great deal of time. It is also difficult subsequently to maintain known structures and to replace corroded, leaky or damaged drain valves or any of the other constituent parts such as wires etc. in case of need. A further disadvantage is that known retainers are not sufficiently shock-absorbing, with the result that the function of the structure is jeopardised or it suffers disadvantageous wear over time.

Prior art does not refer to any wire retainer which anticipates the present invention and which in an easy and cost-effective way helps to facilitate the fitting of, for example, the operating means for the drain valve of a pressure tank.

### SUMMARY OF THE INVENTION

One object of the invention is to solve the aforesaid problems and propose a retainer which is for example intended for an operating means/control device, e.g. a wire or some other elongate object, for a drain valve situated on a pressure tank, and which in a simple and cost-effective way makes it easy to fit said operating means/control device.

A further object of the invention is that it should be possible for the control device/the wire to be fitted to the pressure tank without having to be inserted through a closed loop or hollow which complicates the work.

A further object of the invention is that it should be possible for the control device/the wire to be fitted in a single manufacturing operation and be at the same time easy to fasten in the activating means of the drain valve.

A further object of the invention is that the control device/the wire should remain securely held in the retainer after the fitting operation has been completed but nevertheless be easy to move in axial directions so that the drain valve can easily be opened and closed throughout the vehicle's life cycle.

A further object of the invention is that the structure of the retainer should be simple and comprise as few parts as possible.

A further object of the invention is that constituent parts should be of low weight and easy and inexpensive to manufacture.

These and further objects and advantages are achieved according to the invention by a device defined by the features indicated in the characterising part of the independent claim 1.

As previously mentioned, the invention is primarily intended for heavy commercial vehicles, e.g. trucks, buses and the like, but may of course also be used in other types of vehicles equipped with some form of tank or container and provided with a device which has to be operated by means of a control device, e.g. a wire or some other elongate device, and needs, during operation of the vehicle, to remain held in a specific position relative to the tank.

An important object of the invention is to simplify the fitting of the retainer and the control device so that manufacture is speeded up and becomes more cost-effective.

The invention is achieved by a retainer made of, for example, plastic such as EPDM or the like being provided with an open recess so that two limbs are formed, which recess is intended for the insertion sideways into the retainer of a control device in the form of an elongate object such as a wire or the like. The retainer is further provided with a channel for a preferably straplike element made of plastic or metal intended for fitting and clamping to an adjacent vehicle component, e.g. a pressure tank or the like. When the straplike element is tightened, the retainer is held firmly at the intended location and the outer ends of its limbs are also pressed towards one another. The control device inserted in the recess is thus prevented from sliding out of the retainer but is nevertheless allowed to slide in the axial direction of the control device. This for example makes it easy for a drain valve situated on the pressure tank to be regulated, opened and closed.

The solution according to the invention results in simplified handling and hence more cost-effective fitting. This also makes the solution easier and less expensive to implement not only during manufacture of new vehicles but also when adapting, maintaining or replacing the respective equipment on existing vehicles.

Further features and advantages of the invention are indicated by the more detailed description of it set out below and the attached drawings and other claims.

### BRIEF LIST OF DRAWINGS

The invention is described in more detail below in some preferred embodiment examples with reference to the attached drawings.
**Figure 1** depicts a side view of a conventional pressure tank for compressed air fastened to a vehicle chassis by means of a strap and provided with a wire which is intended for regulation of the tank's drain valve and which is held in position by means of a retainer according to the invention.
**Figure 2** depicts the same structure as in Figure 1 but here showing the tank from below and without the vehicle's masking chassis parts, so that the drain valve and the positioning of the wire are more clearly visible.
**Figure 3** depicts a partial view of the pressure tank as seen obliquely from below, showing in more detail the fitted state of the retainer and how the wire is arranged and runs through the retainer.
**Figure 4** depicts a view from the end of the pressure tank, showing the retainer, the drain valve and parts of the tank's fastening or clamping device.
**Figure 5** depicts a perspective view obliquely from the side of a retainer according to the invention.
**Figure 6** depicts a side view of a preferred retainer according to the invention.
**Figures 7a****-i** depict side views of various different variant embodiments of retainers according to the invention.

### DESCRIPTION OF PREFERRED EMBODIMENTS

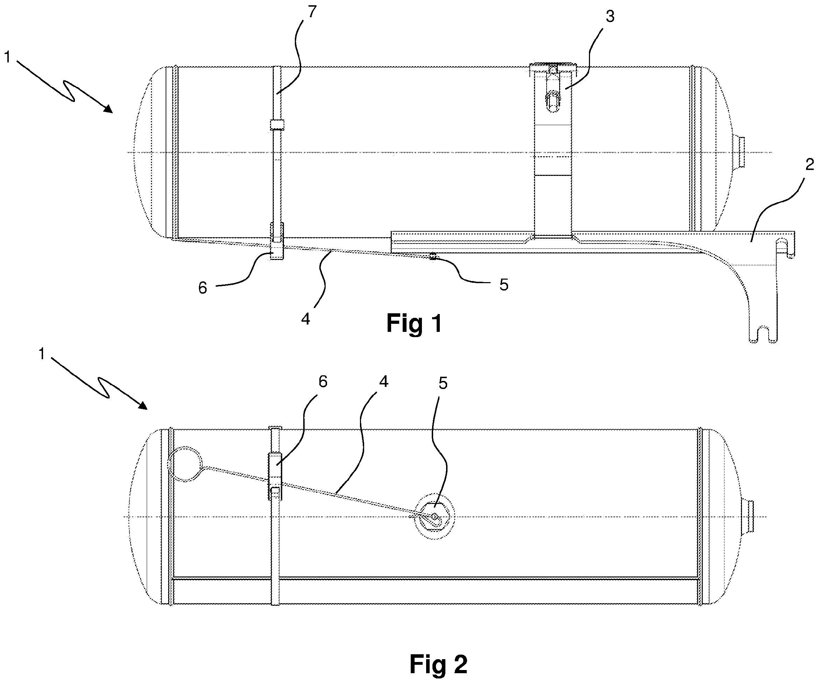

**Figure 1** depicts a side view of a conventional pressure tank 1 for compressed air fastened to a vehicle chassis via a bracket 2 by means of a strap 3 and provided for example with a wire 4 which is intended for regulation of the tank's drain valve 5 and is held in place by means of a retainer 6 according to the invention which is fitted to the tank 1 by means of a straplike element 7.

**Figure 2** depicts the same structure as in Figure 1 but showing the tank 1 as seen from below and without the bracket 2 so that the drain valve 5 and the positioning of the wire 4 are more clearly visible. The control device or the wire has its inner end fastened in the operating means of the drain valve so that the valve can be opened and closed, and the looped outer end of the wire is situated close to the tank's outer endwall which is usually fitted at the side of the vehicle to facilitate access to the control device/the wire. The wire runs through a retainer 6 according to the invention and is therefore readily accessible to the user when the draining operation is to be performed.

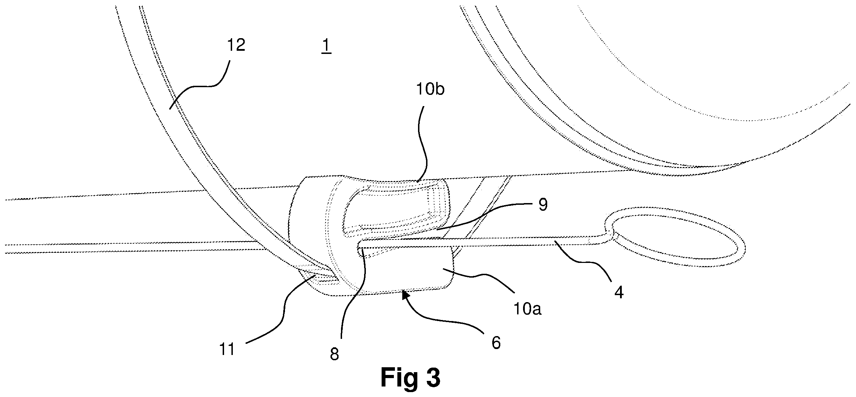

**Figure 3** depicts a partial view of the pressure tank 1 as seen obliquely from below, showing in more detail the fitted state of the retainer 6 and how the control device/the wire 4 is arranged and runs through the retainer.

The retainer 6 preferably takes the form of a single integrated unit made with advantage of plastic, e.g. EPDM. It is provided with an opening or hollow 8 which is positioned substantially centrally and intended for a wire 4 or similar means. The hollow is open on one side of the retainer via a recess 9 in such a way that the retainer forms two limbs 10a,b which can spring relative to one another. The recess 9 is intended for insertion of an elongate control device such as a steel wire 4, a metal or plastic rod or similar means made of some other material rigid enough to operate, for example, a drain valve. The retainer is also provided with a channel 11 which runs through one of the retainer's limbs 10a and is intended for a plastic or metal straplike element 12. The straplike element makes it easy for the retainer to be fitted and clamped against or round an adjacent component of the vehicle, e.g. a pressure tank or the like. When the straplike element is duly tightened, the retainer is held firmly in its intended place relative to the vehicle part while at the same time its limbs 10a,b are pressed towards one another against the action of their inherent spring force. The retainer is thus prevented from sliding out of position and the control device/the wire 4 is prevented from sliding sideways out of the retainer but is nevertheless allowed to slide in the wire's axial direction, i.e. transversely through the retainer. Assurance that the drain valve 5 situated on the tank can easily be opened or closed is thus provided.

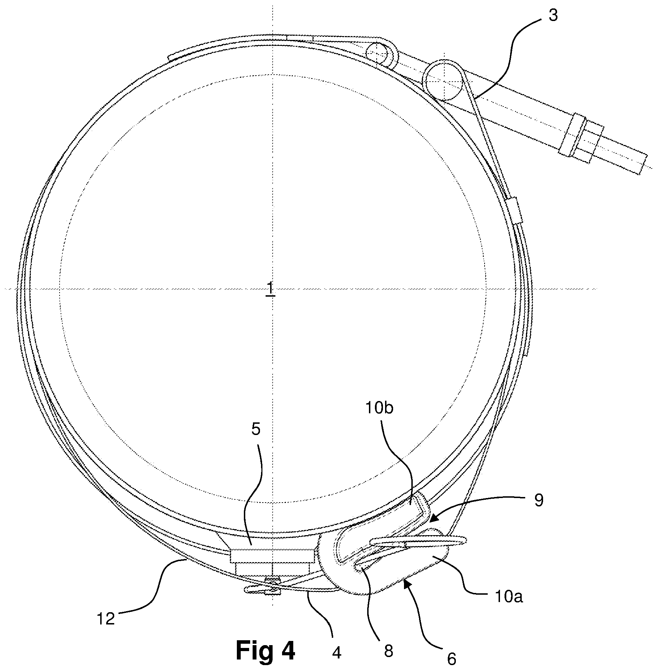

**Figure 4** depicts a plan view from one end of the pressure tank 1, showing the retainer 6, the wire 4, the drain valve 5 and parts of the tank's fastening or clamping devices 3. It shows the straplike element 12 extending round the tank and through the retainer's outer limb 10a. When the straplike element if tightened, the retainer's outer limb 10a is clamped to the central portion of the tank and thereby limits the space in the recess 9 so that the control device/the wire 4 cannot slide sideways out of the retainer.

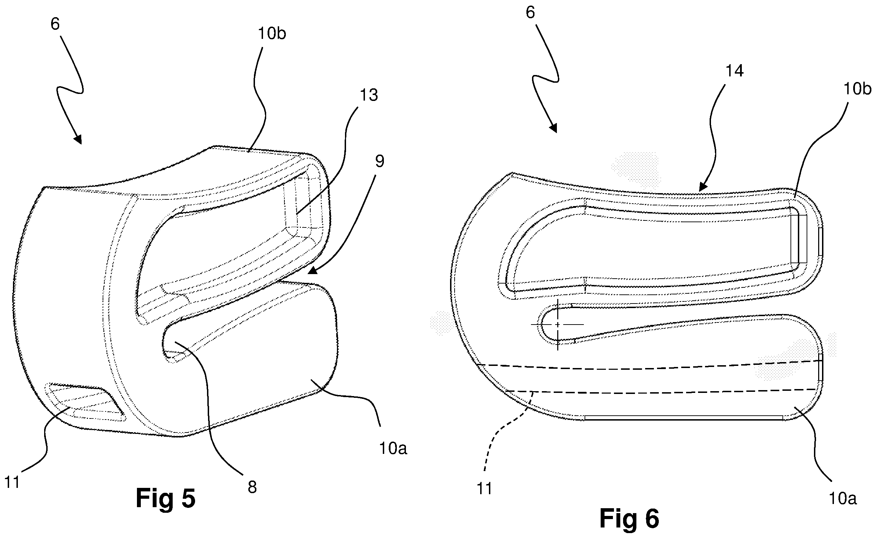

**Figure 5** depicts a perspective view obliquely from the side of a retainer 6 according to the invention. The central opening 8 and the recess 9 which is open outwards on one side form two limbs 10a,b whose end portions can be pressed towards one another and prevent for example a wire (not depicted) from sliding out through the recess 9. The channel 11 for a straplike element (not depicted) is situated in one limb 10a. The retainer may be provided with other apertures 13 to reduce the amount of material required for, and the weight of, the retainer during manufacture.

**Figure 6** depicts a side view of the retainer 6 according to the invention. It shows how one limb 10b which in the fitted state abuts against the pressure tank has a curvature 14 to better match the radius of the tank. This curvature may of course be configured in different ways appropriate to the component to which the retainer is intended to be fitted. The diagram also illustrates how the channel 11 for a straplike element extends through the inner limb 10a.

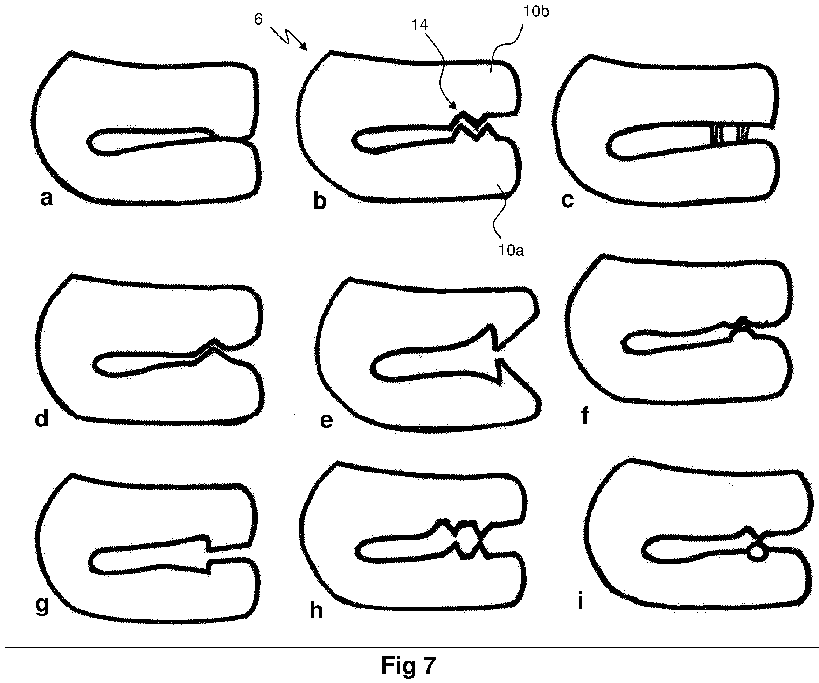

**Figures 7a****-i** depict various side views of a number of different embodiment variants of retainers according to the invention. The most important point here is that the retainer's resilient limbs 10a,b have their outer end regions configured differently to make it easier during fitting for a control device or a wire to be inserted into the retainer by the limbs 10a,b being somewhat open in an unconstrained state or alternatively being able to spring apart slightly when the control device/the wire 4 is inserted into the recess but thereafter being held in the retainer's central hollow, particularly after the straplike element has been fitted and has firmly clamped the retainer to the pressure tank and has thereby pressed the limbs 10a,b towards one another. It is also conceivable for the outer end regions of the limbs 10a,b to be provided with some form of limiting means 14 to prevent or hinder the control device/the wire 4 from sliding out of the central hollow 8 or the recess 9 when it has been properly inserted into the recess. The limiting means 14 in the various diagrams in Figure 7 are in most cases self-explanatory. Figure 7c shows for example a circular cylindrical means pressed towards one another and performing a locking function. Figure 7i shows a triangular means pressed down towards a hemispherical component.

The above description is primarily intended to facilitate comprehension of the invention and is of course not restricted to the embodiments indicated, since other variants of the invention are also possible and conceivable within the scope of the inventive concept and the protective scope of the claims set out below. Thus it is of course perfectly possible to use clamping devices other than straplike elements, e.g. elements with circular cross-sections etc.

## Claims

1. A retainer (6) which is intended to fix a control device (4) to, for example, a pressure tank (1) or similar container and which is fitted/fastened by means of a straplike element (12) wherein the retainer (6) is provided with a hollow (8) forming a first limb (10a) and a second limb (10b), at least one of which limbs (10a,b) is resilient relative to the other in such a way that the outer end portions of the limbs (10a,b) are pressed towards one another when the straplike element (12) is tightened, thereby reducing the width of the hollow (8) and preventing the control device (4) inserted in the hollow (8) from sliding out of the retainer (6) **characterised in that** the retainer (6) is provided with a channel (11) which runs through one of the retainer's limbs (10a), the channel (11) being intended for the straplike element (12).

2. A retainer (6) according to claim 1, **characterised in that** the retainer (6) is made of plastic, e.g. EPDM.

3. A retainer (6) according to claim 1 or 2, **characterised in that** the outer portions of the limbs (10a,b) are provided with limiting means (14) intended to prevent or hinder a control device (4) inserted into the retainer (6) from sliding out of the hollow (8).

4. A retainer (6) according to any one of the foregoing claims, **characterised in that** one limb (10b) is provided with a curvature (14) appropriate to the radius of the component to which the retainer (6) is intended to be fitted.

5. A vehicle provided with a retainer (6) according to any one of claims 1-4.

## Patentansprüche

1. Halter (6), der dazu vorgesehen ist, eine Steuereinrichtung (4) an beispielsweise einem Druckbehälter (1) oder einem ähnlichen Behälter zu befestigen und der mittels eines bandartigen Bauteils (12) angebracht/befestigt wird, wobei der Halter (6) mit einer Ausnehmung (8) versehen ist, die einen ersten Schenkel (10a) und einen zweiten Schenkel (10b) bildet, wobei wenigstens einer der Schenkel (10a, b) bezüglich des anderen solchermaßen federnd nachgiebig ist, dass die äußeren Endstücke der Schenkel (10a, b) aufeinander zu gedrückt werden, wenn das bandartige Bauteil (12) festgezogen wird, wodurch die Breite der Ausnehmung (8) verringert und die in die Ausnehmung (8) eingefügte Steuereinrichtung (4) daran gehindert wird, aus dem Halter (6) heraus zu rutschen, **dadurch gekennzeichnet, dass** der Halter (6) mit einem Kanal (11) versehen ist, der durch einen der Schenkel (10a) des Halters verläuft, wobei der Kanal (11) für das bandartige Bauteil (12) vorgesehen ist.

2. Halter (6) nach Anspruch 1,
**dadurch gekennzeichnet, dass** der Halter (6) aus Kunststoff besteht, z. B. aus EPDM.

3. Halter (6) nach Anspruch 1 oder 2,
**dadurch gekennzeichnet, dass** die äußeren Teile der Schenkel (10a, b) mit Begrenzungsmitteln (14) versehen sind, welche dazu vorgesehen sind, ein Herausrutschen einer in den Halter (6) eingefügten Steuereinrichtung (4) aus der Ausnehmung (8) zu unterbinden oder zu behindern.

4. Halter (6) nach einem der vorhergehenden Ansprüche,
**dadurch gekennzeichnet, dass** ein Schenkel (10b) mit einer Krümmung (14) versehen ist, die dem Radius der Komponente entspricht, an dem der Halter (6) angebracht werden soll.

5. Fahrzeug, das mit einem Halter (6) nach einem der Ansprüche 1 bis 4 ausgerüstet ist.

## Revendications

1. Dispositif de retenue (6) destiné à fixer un dispositif de commande (4) sur, par exemple, un réservoir sous pression (1) ou un récipient similaire et qui est monté/fixé au moyen d'un élément en forme de bande (12), dans lequel le dispositif de retenue (6) est pourvu d'un creux (8) formant un premier membre (10a) et un deuxième membre (10b), dont au moins un membre (10a,b) est élastique par rapport à l'autre de telle sorte que les parties d'extrémité extérieures des membres (10a,b) sont pressées l'une contre l'autre lorsque l'élément en forme de bande (12) est serré, réduisant ainsi la largeur du creux (8) et empêchant le dispositif de commande (4) inséré dans le creux (8) de glisser hors du support (6) **caractérisé en ce que** le dispositif de retenue (6) est muni d'un canal (11) qui traverse l'une de ses branches (10a), le canal (11) étant destiné à l'élément (12) en forme de bande.

2. Dispositif de retenue (6) selon la revendication 1, **caractérisé en ce que** le dispositif de retenue (6) est en matière plastique, par ex. EPDM.

3. Dispositif de retenue (6) selon la revendication 1 ou 2, **caractérisé en ce que** les parties extérieures des membres (10a,b) sont fournies avec des moyens de limitation (14) destinés à empêcher ou à entraver un dispositif de commande (4) inséré dans le dispositif de retenue (6) du glissement du creux (8).

4. Dispositif de retenue (6) selon l'une quelconque des revendications précédentes, **caractérisé en ce qu'**un membre (10b) est fourni avec une courbure (14) appropriée au rayon du composant auquel le dispositif de retenue (6) est conçu pour être ajusté.

5. Véhicule fourni avec un dispositif de retenue (6) selon l'une quelconque des revendications 1 à 4.
